# EUROPEAN PATENT SPECIFICATION

(11) **EP 2 075 168 B1**
(45) Date of publication and mention of the grant of the patent: **05.03.2014**
(21) Application number: 08254060.0
(22) Date of filing: 18.12.2008
(51) Int. Cl.: B60T 8/26, B60T 8/32, B62L 3/08

(54) **Braking device and straddle-type vehicle provided therewith**
Bremsvorrichtung und damit versehenes Grätschsitz-Fahrzeug
Dispositif de freinage et véhicule de type à enfourcher fourni avec celui-ci

(30) Priority: 27.12.2007 JP 2007337428
(43) Date of publication of application: 01.07.2009
(73) Proprietor: Yamaha Hatsudoki Kabushiki Kaisha, Shizuoka-ken Shizuoka 438-8501 (JP)
(72) Inventor: Watanabe, Takahiro, Iwata-shi Shizuoka-ken 438-8501 (JP)
(74) Representative: Zimmermann, Tankred Klaus

(56) References cited:
- EP-A2- 1 277 635
- WO-A1-2004/022395
- WO-A1-2007/118760
- DE-A1-102005 012 775
- JP-A- 2000 264 278

## Description

### Technical Field

The present invention relates to a braking apparatus provided with a front wheel braking mechanism and a rear wheel braking mechanism which are independent of each other, and an assist mechanism assisting braking actions caused by the braking mechanisms, and a straddle-type vehicle provided with the braking apparatus.

### Background Art

There have been marketed motorcycles provided with a so-called interlocked braking mechanism for braking a front wheel according to the operation amount of a front operating member and braking also a rear wheel when the front operating member is operated. Some motorcycles provided with the braking mechanism of the kind perform no interlocking action under stopping or in a state where the speed is close to 0 (see Japanese Patent Application Laid-Open No. 2000-264278).

Thereby, the motorcycles can be effectively decelerated by controlling the interlocked braking mechanism in a high speed traveling state. The enhancement of the steering performance of the motorcycle can be attained by independently controlling the braking of the rear wheel braking mechanism in a low speed traveling state.

And now, when, for example, the motorcycle is held in a stopping condition on an uphill, the front operating member is gripped to effectively make the rear wheel exhibit braking force. However, when the motorcycle is constituted so that the interlocking action is not performed in stopping as described in the Document, such an effect is not obtained.

WO 2007/118760 A1 discloses a a method for regulating the brake pressure in an electronically controlled brake system for a motor vehicle, especially in an integral brake system for a motorcycle. An activation event results in an active pressure increase in a brake circuit while the activation event results in no active pressure increase in a brake circuit, particularly by means of the integral function of the motorcycle brake system, in case a stationary state or approximately stationary state of the vehicle is detected.

The present invention seeks to provide a braking apparatus capable of realizing braking action suited to the intention of a rider over the entire speed range, and a straddle-type vehicle provided with the braking apparatus.

### Summary

A braking apparatus of the present invention includes:
a front wheel braking mechanism braking a front wheel in response to operation of a front operating member;
a rear wheel braking mechanism braking a rear wheel in response to operation of a rear operating member independently of the front wheel braking mechanism;
an assist mechanism making the rear wheel braking mechanism brake the rear wheel in response to operation of a front operating member, wherein the apparatus includes a front wheel speed sensor detecting rotating speed of the front wheel and a rear wheel speed sensor detecting rotating speed of the rear wheel, and assist action caused by the assist mechanism is stopped when a difference between the rotating speed of the rear wheel detected by the rear wheel speed sensor and the rotating speed of the front wheel detected by the front wheel speed sensor is a predetermined value or more.

Since the present invention stops the assist action caused by the assist mechanism when the difference between the rotating speed of the rear wheel and the rotating speed of the front wheel is the predetermined value or more, the present invention can realize the braking suited to the intention of the rider over the entire speed range.

### Brief Description of the Drawings

Embodiments of the invention are described hereinafter, by way of example only, with reference to the accompanying drawings.

Fig. 1 is a left side view of a motorcycle provided with a braking apparatus according to an embodiment of the present invention

Fig. 2 illustrates a circuit constitution of the braking apparatus

Fig. 3 illustrates a flow chart for explaining the action of the braking apparatus

### Detailed Description

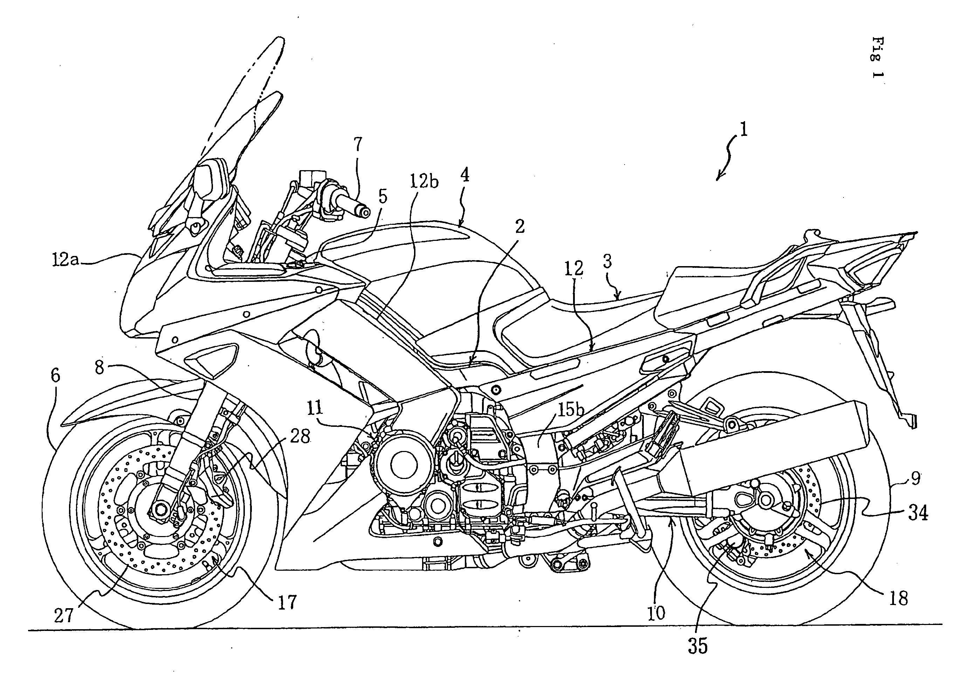

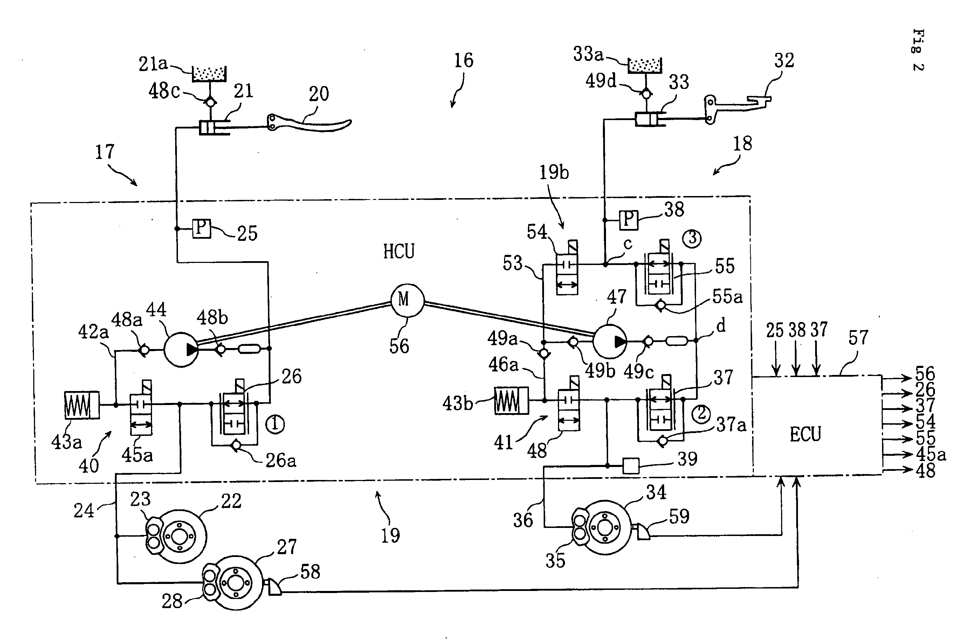

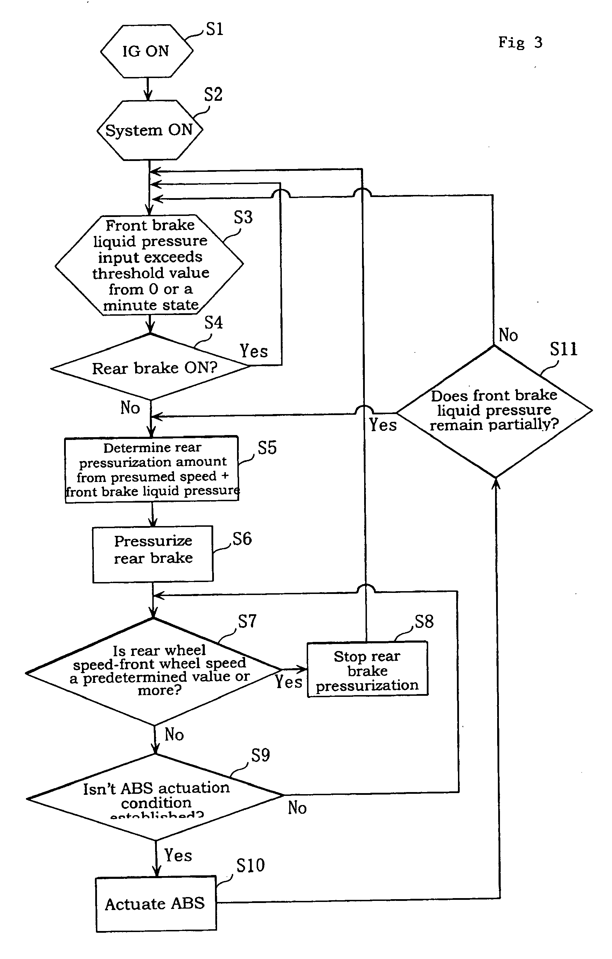

Hereinafter, an embodiment of the present invention will be described with reference to the accompanying drawings. Figs. 1 to 3 are diagrams for explaining an embodiment of the present invention.

In the drawings, numeral number 1 designates a motorcycle provided with a braking apparatus according to the embodiment, and the motorcycle 1 has the following schematic structure. A front fork 8 is steerably supported to the left and right by a head pipe 5 of a front end part of a vehicle body frame 2. The front fork 8 has a lower end part pivotally supporting a front wheel 6 and an upper end part to which a steering handle 7 is fixed. An engine unit 11 is mounted on a main frame part of the vehicle body frame 2. A rear arm 10 is supported so as to be capable of rocking upward and downward by a rear arm bracket 15b. The rear arm 10 has a rear end part supporting a rear wheel 9. Furthermore, a fuel tank 4 is mounted above the engine unit 11, and a seat 3 is mounted to the rear of the fuel tank 4. Numeral number 12 designates a vehicle body cover. The vehicle body cover 12 has a front cover 12a covering an area forward of the steering handle 7 and a side cover 12b covering a lower part of the seat from the side of an engine.

The above motorcycle 1 is provided with a hydraulic braking apparatus 16 braking the front wheel 6 and the rear wheel 9. This braking apparatus 16 includes a front wheel braking mechanism (front brake) 17 and a rear wheel braking mechanism (rear brake) 18 which are constituted to be able to be independently actuated with each other. The braking apparatus 16 further includes an ABS mechanism 19 avoiding the front wheel 6 and the rear wheel 9 from being locked. This ABS mechanism 19 doubles as a part of a rear wheel assist mechanism 19b supplying auxiliary braking force to the rear wheel braking mechanism 18 when the front wheel braking mechanism 17 is operated. The front wheel braking mechanism 17 has a front master cylinder 21 coupled to a front brake lever (front operating member) 20, a first and second brake disks 22, 27 fixed to one and other sides of the front wheel 6, first and second calipers 23, 28 attached to the first and second brake disks 22, 27, and a front hydraulic passage 24 establishing communication and connection between the first and second calipers 23, 28 and the front master cylinder 21. Numeral number 21a designates a front reserve tank for supplying hydraulic oil to the front master cylinder 21.

A front pressure sensor 25 and a non-exciting open type first on-off valve 26 are provided on the way of the front hydraulic passage 24. Numeral number 26a designates a relief valve relieving pressure to the front master cylinder 21 side when the difference between the pressure of the side of the first and second calipers 23, 28 and the pressure of the front master cylinder 21 side is a set value or more.

The first and second calipers 23, 28 have a constitution in which a piston is arranged so as to be freely moved in a cylinder and the piston is brought into contact with a brake pad. When hydraulic pressure is applied to the piston, the piston brings the brake pad in press contact with the brake disk, thereby causing braking force to be generated.

The rear wheel braking mechanism 18 has a rear master cylinder 33 coupled to a brake pedal (rear operating member) 32, a rear brake disk 34 fixed to one side of the rear wheel 9, a rear caliper 35 attached to the rear brake disk 34, a rear hydraulic passage 36 establishing communication and connection between the rear caliper 35 and the rear master cylinder 33. Numeral number 33a designates a rear reserve tank for supplying hydraulic oil to the rear master cylinder 33. A non-exciting open type second on-off valve 37 is provided on the way of the rear hydraulic passage 36. An upper pressure sensor 38 and a lower pressure sensor 39 are provided on the upstream and downstream sides of the second on-off valve 37. Numeral number 37a designates a relief valve relieving pressure to the rear master cylinder 33 side when the difference between the pressure of the rear caliper 35 side and the pressure of the rear master cylinder 33 side is a set value or more.

The ABS mechanism 19 has a front wheel ABS mechanism 40 and a rear wheel ABS mechanism 41. The front wheel ABS mechanism 40 is provided with a relieving passage 42a bypassing the first on-off valve 26 of the front hydraulic passage 24, and a non-exciting close type relieving valve 45a, a front storage tank 43a and a front pump 44 provided on the way of the relieving passage 42a. Numeral numbers 48a, 48b, 48c designate one-way valves for preventing reverse flow. Similarly, the rear wheel ABS mechanism 41 is provided with a rear relieving passage 46a bypassing the second on-off valve 37 of the rear hydraulic passage 36, and a non-exciting close type relieving valve 48, a rear storage tank 43b and a rear pump 47 provided in the relieving passage 46a. Numeral numbers 49a, 49b, 49c, 49d designate one-way valves for preventing reverse flow. The front pump 44 and the rear pump 47 are driven by a common electric motor 56.

The ABS mechanism 19 has a front wheel speed sensor 58 detecting the rotating speed of the front wheel 6, and a rear wheel speed sensor 59 detecting the rotating speed of the rear wheel 9. The ABS mechanism 19 relieves the hydraulic pressure applied to the caliper to be actuated so as to avoid the wheel from being locked when a deceleration calculated from the detection values of both the speed sensors exceeds a predetermined value, which will be described below.

The rear wheel assist mechanism 19b has the following constitution:
communication and connection are established between a portion c on the way of the rear hydraulic passage 36, consequently a rear reserve tank 33a and the suction side of the rear pump 47 via a complement passage 53; a non-exciting close type complement on-off valve 54 is provided in the complement passage 53; furthermore, a non-exciting open type third on-off valve 55 is provided between the connecting point d of the rear hydraulic passage 36 and discharge side of the rear pump 47 and the portion c. Numeral number 55a designates a relief valve relieving pressure to the caliper side when the difference between the pressure of the master cylinder 33 side and the pressure of the rear caliper 35 side is a predetermined value or more.

Numeral number 57 designates an ECU controlling the opening/ closing action of each of the on-off valves and relieving valves. The ECU 57, to which the detection pressures of the pressure sensors 25, 30, 38, 39, and the detection rotating speeds of the front wheel speed sensor 58 and rear wheel speed sensor 59 are input, outputs a start/ stop signal to the electric motor 56, and outputs an opening/closing control signal to each of the on-off valves 26, 37, 54, 55 and the relieving valves 45a, 48.

The action of the braking apparatus of the embodiment will be described.

When the grip operation of the front brake lever 20 is performed, the hydraulic pressure generated in the front master cylinder 21 is applied to the front and rear calipers 23, 28 to brake the front wheel 6. When the pedaling operation of the brake pedal 32 is performed, the hydraulic pressure generated in the rear master cylinder 33 is applied to the rear caliper 35 to brake the rear wheel 9.

The ECU 57 actuates the ABS mechanism when the front wheel 6 or the rear wheel 9 is in a lock state. Specifically, for example, the ECU 57 judges that the front wheel 6 is in the lock state when a deceleration calculated from the detection rotating speed of the front wheel speed sensor 58 exceeds a predetermined threshold value, energizes the relieving valve 45a to open the relieving valve 45a to relieve the hydraulic pressure applied to the caliper 23, 28 to the front storage tank 43a. At this time, the ECU 57 energizes the on-off valve 26 to close the on-off valve 26. The ECU 57 starts the motor 56 when the deceleration is less than the threshold value to suck and pressurize the hydraulic oil in the front storage tank 43a using the front pump 44, and stops power supply to the relieving valve 45a and the on-off valve 26 to close the relieving valve 45a and open the on-off valve 26. The ECU 57 supplies the hydraulic pressure from the front pump 44 to the first and second calipers 23, 28. The ECU 57 repeats the relief and supply of the hydraulic pressure to the caliper for every short time.

Similarly, when the ECU 57 judges that the rear wheel 9 is in the lock state, the ECU 57 opens the relieving valve 48 to relieve the hydraulic pressure applied to the rear caliper 35 to the rear storage tank 43b.

The ECU 57 sucks and pressurizes the hydraulic oil in the rear storage tank 43b using the rear pump 47 to supply the hydraulic oil to the caliper 35 when the lock state of the rear wheel 9 is released. The ECU 57 repeats this action.

The ECU 57 actuates the rear wheel assist mechanism 19b when the front brake lever 20 is operated and the detection pressure of the pressure sensor 25 exceeds a predetermined value. Specifically, the ECU 57 energizes the on-off valves 54, 55 to open the on-off valve 54 and close the on-off valve 55. The ECU 57 starts the motor 56 to suck and pressurize the hydraulic oil using the rear pump 47 via the on-off valve 54 from the rear reserve tank 33a. The ECU 57 supplies the hydraulic oil to the rear caliper 35 via the on-off valve 37, and brakes the rear wheel 9 so as to interlock the rear wheel 9 with the front wheel 6.

The ECU 57 calculates the rotating speeds of the front wheel 6 and rear wheel 9 from the detection values of the front wheel speed sensor 58 and rear wheel speed sensor 59. The ECU 57 stops the interlocking action even when the detection pressure of the pressure sensor 25 exceeds a predetermined value in the case where the rotating speed of the rear wheel 9 is higher by a predetermined value than the rotating speed of the front wheel 6. Therefore, for example, when a rider grips the front brake lever 20 in the stopping state and opens a throttle grip to idle the rear wheel 9, the rear wheel is not braked.

On the other hand, when the front wheel 6 is in the lock state in traveling, the ABS mechanism 19 is actuated so as to release the lock state of the front wheel 6 as described above. However, in this case, the rotating speed of the rear wheel 9 may be higher by the predetermined value than the rotating speed of the front wheel 6. However, when the actuation condition of the ABS mechanism is thus established, the interlocking operation is not stopped. Therefore, in this case, the rear wheel 9 is braked by interlocking with the braking action of the front wheel 6

Next, the action of the apparatus of the embodiment will be described with reference to a flow chart.

When an ignition switch is turned on, a controlling system is turned on (steps S1, S2). When a front brake liquid pressure from the pressure sensor 25 of the front wheel braking mechanism 17 exceeds a predetermined threshold value from 0 or a minute state (step S3), and the rear wheel braking mechanism 18 is not turned on (Step S4), a rear pressurization amount caused by the rear wheel assist mechanism 19b is determined from the presumed speed and the front brake liquid pressure, and the rear wheel 9 is braked by interlocking with the front wheel based on the determined rear pressurization amount (steps S5, S6).

When it is judged that the rear wheel braking mechanism 18 is turned on from the liquid pressure to the rear caliper 35 in the step S4, the procedure is returned to step S3, and the interlocked braking of the rear wheel is not performed.

It is judged whether the rear wheel speed from the rear wheel rotation sensor 59 is higher by a predetermined value than the front wheel speed from the front wheel rotation sensor 58 when the rear wheel 9 is braked by interlocking with the front wheel. When the rear wheel speed is higher, that is, for example, when the rear wheel idles, the braking of the rear wheel is stopped (steps S7, S8).

It is judged whether the operation condition of the ABS mechanism 19 is established, that is, the deceleration of the front wheel 6 or rear wheel 9 is the predetermined value or more when the rear wheel speed is not higher by the predetermined value than the front wheel speed (step S9). When the operation condition is not established, the procedure is returned to step S7, and the interlocked braking of the rear wheel is continued. On the other hand, when the ABS operation condition is established, the ABS mechanism is actuated (step S10). Then, it is judged whether the front brake liquid pressure remains partially, that is, the front brake liquid pressure is, for example, higher than another threshold value lower than the threshold value of the front brake liquid pressure in the step S3 (Step S11). When the front brake liquid pressure remains partially, the procedure is returned to step S5, and the interlocked braking of the rear wheel 9 is continued. On the other hand, when no front brake liquid pressure remains, the procedure is returned to step S3. When the braking operation of the front wheel 6 is newly performed, the rear wheel 9 is braked by interlocking with the front wheel 6.

Thus, the embodiment can realize the braking suited to the intention of the rider over the entire speed range. Specifically, when the grip operation of the front brake lever 20 is performed, the front wheel 6 is braked by the hydraulic pressure generated in the front master cylinder 21, and the rear wheel 9 is braked by interlocking with the front wheel by the hydraulic pressure generated in the rear wheel assist mechanism 19b. Therefore, since, for example, the rear wheel 9 is also braked by only the grip operation of the front brake lever 20 without operating the rear brake pedal 32 with foot when the vehicle is held in a stopping condition on an uphill, the vehicle is easily and certainly held on the uphill.

On the other hand, since the interlocked braking of the rear wheel 9 is stopped when the rear wheel rotating speed is higher by the predetermined value than the front wheel rotating speed in a state where the front brake lever 20 is gripped, the rear brake disk 34 of the rear wheel braking mechanism 18 can be prevented from being overheated by friction. In particular, the embodiment is effective when the front brake lever 20 is gripped and the rear wheel 9 is idled in the stopping state.

Furthermore, when the front wheel 6 is in the lock state, the rear wheel rotating speed may be higher by the predetermined value than the front wheel rotating speed. However, when the ABS mechanism actuation condition is satisfied, the stop of the rear wheel interlocking action is released. That is, since the interlocked braking of the rear wheel is carried out when ABS mechanism action condition is satisfied, the generation of the situation where the rear wheel 9 does not interlock with the braking of the front wheel 6 in traveling can be avoided.

Since the actuation condition of the ABS mechanism is defined as the case where the deceleration of the front wheel 9 is a previously set threshold value or more, the actuation condition of the ABS mechanism is easily and certainly detected as compared with the case where the difference between the rotating speeds of the front wheel and rear wheel is the predetermined value or more.

The embodiment describes the case where a part of the rear wheel assist mechanism doubles as the ABS mechanism. However, the present invention can be adopted even when the motorcycle is not provided with the ABS mechanism. In this case, the motorcycle is provided with a motor and a pump only for the assist mechanism.

### Description of the Reference Numerals

1: motorcycle
6: front wheel
9: rear wheel
16: braking apparatus
17: front wheel braking mechanism
18: rear wheel braking mechanism
19: ABS mechanism
19b: assist mechanism
20: front operating member
32: rear operating member
58: front wheel speed sensor
59: rear wheel speed sensor

## Claims

1. A braking apparatus (16) comprising:
a front wheel braking mechanism (17) braking a front wheel (6) in response to operation of a front operating member (20);
a rear wheel braking mechanism (18) braking a rear wheel (9) in response to operation of a rear operating member (32) independently of the front wheel braking mechanism (17);
an assist mechanism (19b) making the rear wheel braking mechanism (18) brake the rear wheel (9) in response to operation of a front operating member (20), wherein the braking apparatus (16) includes a front wheel speed sensor (58) detecting rotating speed of the front wheel (6) and a rear wheel speed sensor (59) detecting rotating speed of the rear wheel (9),
**characterized in that** assist action caused by the assist mechanism (19b) is stopped when a difference between the rotating speed of the rear wheel (9) detected by the rear wheel speed sensor (59) and the rotating speed of the front wheel (6) detected by the front wheel speed sensor (58) is a predetermined value or more.

2. The braking apparatus (16) according to claim 1, wherein the assist action caused by the assist mechanism (19b) is stopped when the rotating speed of the front wheel (6) detected by the front wheel speed sensor (58) is 0 or a predetermined low speed rotation or less, and the difference between the rotating speed of the rear wheel (9) detected by the rear wheel speed sensor (59) and the rotating speed of the front wheel (6) detected by the front wheel speed sensor (58) is the predetermined value or more.

3. The braking apparatus (16) according to claim 1, further comprising an ABS mechanism (19) for avoiding the front wheel (6) or the rear wheel (9) from being locked, wherein the assist action caused by the assist mechanism (19b) is performed even when the difference between the rotating speed of the rear wheel (9) detected by the rear wheel speed sensor (59) and the rotating speed of the front wheel (6) detected by the front wheel speed sensor (58) is the predetermined value or more in a case where the ABS mechanism (19) is actuated.

4. The braking apparatus (16) according to claim 3, wherein the ABS mechanism (19) is actuated when a deceleration of the front wheel (6) or rear wheel (9) exceeds a predetermined value.

5. A straddle-type vehicle (1) comprising the braking apparatus (16) according to any one of claims 1 to 4.

## Patentansprüche

1. Eine Bremsvorrichtung (16), die folgende Merkmale aufweist:
einen Vorderradbremsmechanismus (17), der ansprechend auf einen Betrieb eines vorderen Betriebsbauglieds (20) ein Vorderrad (6) bremst;
einen Hinterradbremsmechanismus (18), der ansprechend auf einen Betrieb eines hinteren Betriebsbauglieds (32) unabhängig von dem Vorderradbremsmechanismus (17) ein Hinterrad (9) bremst;
einen Hilfsmechanismus (19b), der ansprechend auf einen Betrieb eines vorderen Betriebsbauglieds (20) den Hinterradbremsmechanismus (18) dazu veranlasst, das Hinterrad (9) zu bremsen, wobei die Bremsvorrichtung (16) einen Vorderradgeschwindigkeitssensor (58), der eine Drehgeschwindigkeit des Vorderrades (6) erfasst, und einen Hinterradgeschwindigkeitssensor (59), der eine Drehgeschwindigkeit des Hinterrades (9) erfasst, umfasst,
**dadurch gekennzeichnet, dass** ein durch den Hilfsmechanismus (19b) bewirkter Hilfsvorgang beendet wird, wenn eine Differenz zwischen der durch den Hinterradgeschwindigkeitssensor (59) erfassten Drehgeschwindigkeit des Hinterrades (9) und der durch den Vorderradgeschwindigkeitssensor (58) erfassten Drehgeschwindigkeit des Vorderrades (6) ein vorbestimmter Wert oder mehr ist.

2. Die Bremsvorrichtung (16) gemäß Anspruch 1, bei der der durch den Hilfsmechanismus (19b) bewirkte Hilfsvorgang beendet wird, wenn die durch den Vorderradgeschwindigkeitssensor (58) erfasste Drehgeschwindigkeit des Vorderrades (6) 0 oder eine Drehung bei einer vorbestimmten niedrigen Geschwindigkeit oder weniger beträgt und die Differenz zwischen der durch den Hinterradgeschwindigkeitssensor (59) erfassten Drehgeschwindigkeit des Hinterrades (9) und der durch den Vorderradgeschwindigkeitssensor (58) erfassten Drehgeschwindigkeit des Vorderrades (6) der vorbestimmte Wert oder mehr ist.

3. Die Bremsvorrichtung (16) gemäß Anspruch 1, die ferner einen ABS-Mechanismus (19) aufweist, um zu vermeiden, dass das Vorderrad (6) oder das Hinterrad (9) blockiert werden, wobei der durch den Hilfsmechanismus (19b) bewirkte Hilfsvorgang sogar dann durchgeführt wird, wenn die Differenz zwischen der durch den Hinterradgeschwindigkeitssensor (59) erfassten Drehgeschwindigkeit des Hinterrades (9) und der durch den Vorderradgeschwindigkeitssensor (58) erfassten Drehgeschwindigkeit des Vorderrades (6) in einem Fall, in dem der ABS-Mechanismus (19) betätigt ist, der vorbestimmte Wert oder mehr ist.

4. Die Bremsvorrichtung (16) gemäß Anspruch 3, bei der der ABS-Mechanismus (19) betätigt wird, wenn eine Verlangsamung des Vorderrades (6) oder Hinterrades (9) einen vorbestimmten Wert überschreitet.

5. Ein Fahrzeug (1) vom rittlings zu fahrenden Typ, das die Bremsvorrichtung (16) gemäß einem der Ansprüche 1 bis 4 aufweist.

## Revendications

1. Dispositif de freinage (16) comprenant:
un mécanisme de freinage de roue avant (17) freinant une roue avant (6) en réponse au fonctionnement d'un élément d'actionnement avant (20);
un mécanisme de freinage de roue arrière (18) freinant une roue arrière (9) en réponse au fonctionnement d'un élément d'actionnement arrière (32) indépendamment du mécanisme de freinage de roue avant (17);
un mécanisme d'assistance (19b) faisant freiner la roue arrière (9) par le mécanisme de freinage de roue arrière (18) en réponse au fonctionnement d'un élément d'actionnement avant (20), où l'appareil de freinage (16) comporte un capteur de vitesse de roue avant (58) détectant la vitesse de rotation de la roue avant (6) et un capteur de vitesse de roue arrière (59) détectant la vitesse de rotation de la roue arrière (9),
**caractérisé par le fait que** l'action d'assistance provoquée par le mécanisme d'assistance (19b) est arrêtée lorsqu'une différence entre la vitesse de rotation de la roue arrière (9) détectée par le capteur de vitesse de roue arrière (59) et la vitesse de rotation de la roue avant (6) détectée par le capteur de vitesse de roue avant (58) est une valeur prédéterminée ou supérieure.

2. Dispositif de freinage (16) selon la revendication 1, dans lequel l'action d'assistance provoquée par le mécanisme d'assistance (19b) est arrêtée lorsque la vitesse de rotation de la roue avant (6) détectée par le capteur de vitesse de roue avant (58) est égale à 0 ou à une rotation à faible vitesse prédéterminée ou inférieure, et que la différence entre la vitesse de rotation de la roue arrière (9) détectée par le capteur de vitesse de roue arrière (59) et la vitesse de rotation de la roue avant (6) détectée par le capteur de vitesse de roue avant (58) est la valeur prédéterminée ou supérieure.

3. Dispositif de freinage (16) selon la revendication 1, comprenant par ailleurs un mécanisme ABS (19) pour éviter que la roue avant (6) ou la roue arrière (9) ne soit verrouillée, où l'action d'assistance provoquée par le mécanisme d'assistance (19b) est réalisée même lorsque la différence entre la vitesse de rotation de la roue arrière (9) détectée par le capteur de vitesse de roue arrière (59) et la vitesse de rotation de la roue avant (6) détectée par le capteur de vitesse de roue avant (58) est la valeur prédéterminée ou supérieure au cas où le mécanisme ABS (19) est actionné.

4. Dispositif de freinage (16) selon la revendication 3, dans lequel le mécanisme ABS (19) est actionné lorsqu'une décélération de la roue avant (6) ou de la roue arrière (9) excède une valeur prédéterminée.

5. Véhicule de type à enfourcher (1) comprenant le dispositif de freinage (16) selon l'une quelconque des revendications 1 à 4.
